# EUROPEAN PATENT APPLICATION

(11) **EP 3 373 616 A1**
(43) Date of publication of application: **12.09.2018**
(21) Application number: 18160775.5
(22) Date of filing: 08.03.2018
(51) Int. Cl.: H04W 4/80, G06F 17/30

(54) **SEARCHING BASED ON BEACON SIGNALS**

(30) Priority: 09.03.2017 KR 20170030212
(71) Applicant: Samsung Electronics Co., Ltd., Suwon-si, Gyeonggi-do 16677 (KR)
(72) Inventor: CHOI, Yoon-Jeong, Suwon-si, Gyeonggi-do, 16677 (KR); LEE, Young-Jin, Suwon-si, Gyeonggi-do, 16677 (KR); KWON, Ki-Hong, Suwon-si, Gyeonggi-do, 16677 (KR); YOU, Ho-Sung, Suwon-si, Gyeonggi-do, 16677 (KR); LEE, Chang-Ho, Suwon-si, Gyeonggi-do, 16677 (KR); JO, Han-Sol, Suwon-si, Gyeonggi-do, 16677 (KR)
(74) Representative: HGF Limited

(57) **Abstract**

The present disclosure relates to an electronic device and a beacon-based searching method by the electronic device, which may store one or more data items received through a beacon signal using the wireless communication circuit, obtain information related to at least one data item related to a keyword search requested from among the one or more stored data items corresponding to a keyword search request, and display at least part of the obtained information on a screen.

## Description

### TECHNICAL FIELD

The present disclosure relates generally to electronic devices and methods for searching data based on beacon signals by electronic devices.

### DISCUSSION OF RELATED ART

In short-range communication, an electronic device may receive signals (e.g., beacon signals) that at least one electronic device (e.g., a beacon device) broadcasts. Among various beacon signal communication techniques, the physical web proposes the concept that an electronic device, upon receiving a beacon signal, accesses the webpage corresponding to information contained in the beacon signal through a web browser application to receive the service related to the beacon signal. The electronic device may display part of the data contained in the webpage, providing the service related to the beacon signal to the user.

An electronic device, upon receiving a beacon signal, may display a message indicating that the beacon signal is received. Upon identifying a designated input to the displayed message, the electronic device may delete the displayed message and the information corresponding to the beacon signal, or the electronic device may delete the information corresponding to the beacon signal a designated time after it has been received.

The above information is presented as background information only to assist with an understanding of the present disclosure.

### SUMMARY

According to an example embodiment of the present disclosure, an electronic device and a beacon-based searching method by the electronic device may, upon receiving a beacon signal, store at least one of identification information and uniform/universal resource locator (URL) information of the beacon signal and access a webpage corresponding to the URL information to store at least part of the data contained in the webpage as information corresponding to the beacon signal.

According to an example embodiment of the present disclosure, an electronic device and a beacon-based searching method by the electronic device may display at least one piece of information corresponding to the stored beacon signal, as a result of searching through a web browser application based on the information corresponding to the stored beacon signal.

According to an example embodiment of the present disclosure, an electronic device comprises a wireless communication circuit, at least one processor electrically connected with the wireless communication circuit, and a memory electrically connected with the processor, wherein the memory may store instructions, which when executed by the processor, cause the electronic device to store one or more data items received through a beacon signal using the wireless communication circuit, to obtain information related to at least one data item related to a keyword search requested from among the one or more stored data items corresponding to a keyword search request, and to display at least part of the obtained information on a screen.

According to an example embodiment of the present disclosure, a method for searching by an electronic device may comprise storing one or more data items received through a beacon signal, obtaining information related to at least one data item related to a keyword search requested from among the one or more stored data items corresponding to a keyword search request, and displaying, on a screen, at least part of the obtained information.

Other aspects, advantages, and salient features of the disclosure will become apparent to those skilled in the art from the following detailed description, which, taken in conjunction with the annexed drawings, discloses various example embodiments of the disclosure.

### BRIEF DESCRIPTION OF THE DRAWINGS

The above and/or other aspects, features and attendant advantages of the present disclosure will be more apparent and readily appreciated from the following detailed description, taken in conjunction with the accompanying drawings, in which like reference numerals refer to like elements and wherein:
Fig. 1 is a diagram illustrating an example electronic device in a network environment according to an example embodiment of the present disclosure;
Fig. 2 is a block diagram illustrating an example configuration of an electronic device according to an example embodiment of the present disclosure;
Fig. 3 is a block diagram illustrating an example program module configuration according to an example embodiment of the present disclosure;
Fig. 4 is a diagram illustrating an example of various devices in a network environment according to an example embodiment of the present disclosure;
Fig. 5 is a block diagram illustrating an example configuration of an electronic device according to an example embodiment of the present disclosure;
Fig. 6 is a flowchart illustrating an example operation of searching based on information corresponding to a stored beacon signal by an electronic device according to an example embodiment of the present disclosure;
Fig. 7 is a diagram illustrating an example screen configuration of displaying information corresponding to a received beacon signal by an electronic device according to an example embodiment of the present disclosure;
Fig. 8 is a diagram illustrating an example screen configuration of displaying and searching for information about a received beacon signal by an electronic device according to an example embodiment of the present disclosure;
Fig. 9 is a flowchart illustrating an example operation of storing information corresponding to a beacon signal by an electronic device according to an example embodiment of the present disclosure;
Fig. 10 is a diagram illustrating an example screen configuration of displaying information corresponding to a stored beacon signal by an electronic device according to an example embodiment of the present disclosure;
Fig. 11 is a diagram illustrating an example screen configuration of displaying a search result using a web browser application based on a beacon signal by an electronic device according to an example embodiment of the present disclosure;
Fig. 12 is a diagram illustrating an example screen configuration of displaying a search result using a web browser application based on a beacon signal by an electronic device according to an example embodiment of the present disclosure; and
Fig. 13 is a diagram illustrating an example screen configuration of displaying and searching for information corresponding to a received beacon signal by an electronic device according to an example embodiment of the present disclosure.

Throughout the drawings, like reference numerals will be understood to refer to like parts, components, and structures.

### DETAILED DESCRIPTION

Hereinafter, various example embodiments of the present disclosure are described with reference to the accompanying drawings. However, it should be appreciated that the present disclosure is not limited to the embodiments and the terminology used herein, and all changes and/or equivalents or replacements thereto also belong to the scope of the present disclosure. The same or similar reference denotations may be used to refer to the same or similar elements throughout the specification and the drawings. It is to be understood that the singular forms "a," "an," and "the" include plural references unless the context clearly dictates otherwise. As used herein, the terms "A or B" or "at least one of A or B" may include all possible combinations of A and B. As used herein, the terms "first" and "second" may modify various components regardless of importance and/or order and are used to distinguish a component from another without limiting the components. It will be understood that when an element (e.g., a first element) is referred to as being (operatively or communicatively) "coupled with/to," or "connected with/to" another element (e.g., a second element), it can be coupled or connected with/to the other element directly or via a third element.

As used herein, the terms "configured to" may be interchangeably used with other terms, such as "suitable for," "capable of," "modified to," "made to," "adapted to," "able to," or "designed to" in hardware or software in the context. Rather, the term "configured to" may refer to a situation in which a device can perform an operation together with another device or parts. For example, the term "processor configured (or set) to perform A, B, and C" may refer, for example, and without limitation, to a generic-purpose processor (e.g., a CPU or application processor) that may perform the operations by executing one or more software programs stored in a memory device or a dedicated processor (e.g., an embedded processor) for performing the operations, or the like.

For example, examples of the electronic device according to embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a medical device, a camera, or a wearable device. The wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device. In some embodiments, examples of the smart home appliance may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a TV box (e.g., Samsung HomeSync™ , Apple TV™ , or Google TV™) , a gaming console (Xbox™, PlayStation™), an electronic dictionary, an electronic key, a camcorder, or an electronic picture frame, or the like, but is not limited thereto.

According to an embodiment of the present disclosure, the electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, drones, automatic teller's machines (ATMs), point of sales (POS) devices, or internet of things (IoT) devices (e.g., a bulb, various sensors, a sprinkler, a fire alarm, a thermostat, a street light, a toaster, fitness equipment, a hot water tank, a heater, or a boiler). According to various embodiments of the disclosure, examples of the electronic device may at least one of part of a piece of furniture, building/structure or vehicle, an electronic board, an electronic signature receiving device, a projector, or various measurement devices (e.g., devices for measuring water, electricity, gas, or electromagnetic waves), or the like, but is not limited thereto. According to various example embodiments of the present disclosure, the electronic device may be flexible or may be a combination of the above-enumerated electronic devices. According to an embodiment of the present disclosure, the electronic device is not limited to the above-listed embodiments. As used herein, the term "user" may denote a human or another device (e.g., an artificial intelligent electronic device) using the electronic device.

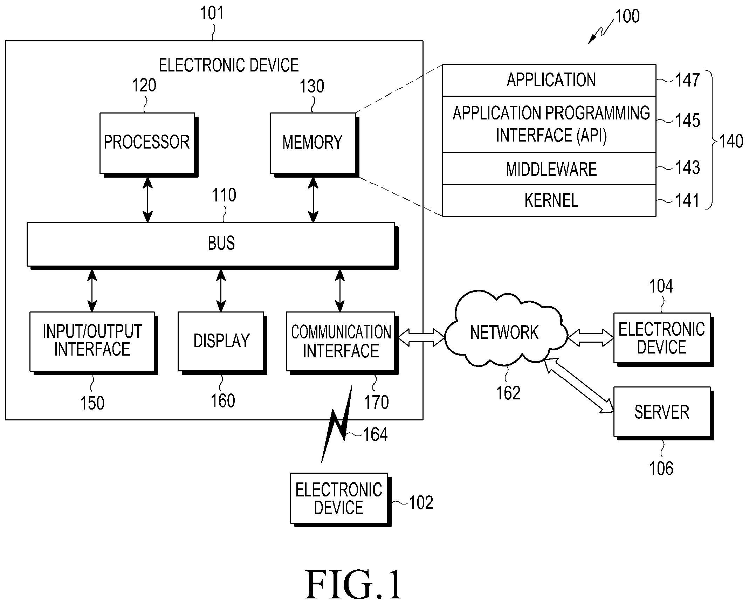

Fig. 1 is a diagram illustrating an example electronic device in a network environment according to an example embodiment of the present disclosure.

Referring to Fig. 1, an electronic device 101 is included in a network environment 100. The electronic device 101 may include a bus 110, a processor 120, a memory 130, an input/output interface 150, a display 160, and a communication interface 170. In some embodiments, the electronic device 101 may exclude at least one of the components or may add another component.

The bus 110 may include a circuit for connecting the components 110 to 170 with one another and transferring communications (e.g., control messages or data) between the components.

The processor 120 may include various processing circuitry, such as, for example, and without limitation, one or more of a dedicated processor, a central processing unit (CPU), an application processor (AP), or a communication processor (CP), or the like. The processor 120 may perform control on at least one of the other components of the electronic device 101 or perform an operation or data processing relating to communication.

The memory 130 may include a volatile and/or non-volatile memory. For example, the memory 130 may store commands or data related to at least one other component of, e.g., the electronic device 101. According to an embodiment of the present disclosure, the memory 130 may store software or a program 140. The program 140 may include, e.g., a kernel 141, middleware 143, an application programming interface (API) 145, or an application program (or "application") 147. At least a portion of the kernel 141, middleware 143, or API 145 may be denoted an operating system (OS). For example, the kernel 141 may control or manage system resources (e.g., the bus 110, processor 120, or a memory 130) used to perform operations or functions implemented in other programs (e.g., the middleware 143, API 145, or application program 147). The kernel 141 may provide an interface that allows the middleware 143, the API 145, or the application 147 to access the individual components of the electronic device 101 to control or manage the system resources.

The middleware 143 may function as a relay to allow the API 145 or the application 147 to communicate data with the kernel 141, for example. Further, the middleware 143 may process one or more task requests received from the application program 147 in order of priority. For example, the middleware 143 may assign a priority of using system resources (e.g., bus 110, processor 120, or memory 130) of the electronic device 101 to at least one of the application programs 147 and process one or more task requests. The API 145 is an interface allowing the application 147 to control functions provided from the kernel 141 or the middleware 143. For example, the API 133 may include at least one interface or function (e.g., a command) for filing control, window control, image processing or text control. For example, the input/output interface 150 may transfer commands or data input from the user or other external device to other component(s) of the electronic device 101 or may output commands or data received from other component(s) of the electronic device 101 to the user or other external devices.

The display 160 may include, e.g., a liquid crystal display (LCD), a light emitting diode (LED) display, an organic light emitting diode (OLED) display, or a microelectromechanical systems (MEMS) display, or an electronic paper display, or the like, but is not limited thereto. The display 160 may display, e.g., various contents (e.g., text, images, videos, icons, or symbols) to the user. The display 160 may include a touchscreen and may receive, e.g., a touch, gesture, proximity or hovering input using an electronic pen or a body portion of the user.

For example, the communication interface 170 may set up communication between the electronic device 101 and an external electronic device (e.g., a first electronic device 102, a second electronic device 104, or a server 106). For example, the communication interface 170 may be connected with the network 162 through wireless or wired communication to communicate with the external electronic device (e.g., the second external electronic device 104 or server 106).

The wireless communication may include cellular communication which uses at least one of, e.g., long term evolution (LTE), long term evolution- advanced (LTE-A), code division multiple access (CDMA), wideband code division multiple access (WCDMA), universal mobile telecommunication system (UMTS), wireless broadband (WiBro), or global system for mobile communication (GSM). According to an embodiment of the present disclosure, the wireless communication may include at least one of, e.g., wireless-fidelity (Wi-Fi), light-fidelity (Li-Fi), bluetooth, bluetooth low power (BLE), zigbee, near-field communication (NFC), magnetic secure transmission (MST), radio frequency (RF), or body area network (BAN) as denoted with element 164 of Fig. 1. According to an embodiment of the present disclosure, the wireless communication may include global navigation satellite system (GNSS). The GNSS may be, e.g., global positioning system (GPS), global navigation satellite system (Glonass), Beidou navigation satellite system (hereinafter, "Beidou") or Galileo, or the European global satellite-based navigation system. Hereinafter, the terms "GPS" and the "GNSS" may be interchangeably used herein. The wired connection may include at least one of, e.g., universal serial bus (USB), high definition multimedia interface (HDMI), recommended standard (RS)-232, power line communication (PLC), or plain old telephone service (POTS). The network 162 may include at least one of telecommunication networks, e.g., a computer network (e.g., local area network (LAN) or wide area network (WAN)), Internet, or a telephone network.

The first and second external electronic devices 102 and 104 each may be a device of the same or a different type from the electronic device 101. According to an embodiment of the present disclosure, all or some of operations executed on the electronic device 101 may be executed on another or multiple other electronic devices (e.g., the electronic devices 102 and 104 or server 106). According to an embodiment of the present disclosure, when the electronic device 101 should perform some function or service automatically or at a request, the electronic device 101, instead of executing the function or service on its own or additionally, may request another device (e.g., electronic devices 102 and 104 or server 106) to perform at least some functions associated therewith. The other electronic device (e.g., electronic devices 102 and 104 or server 106) may execute the requested functions or additional functions and transfer a result of the execution to the electronic device 101. The electronic device 101 may provide a requested function or service by processing the received result as it is or additionally. To that end, a cloud computing, distributed computing, or client-server computing technique may be used, for example.

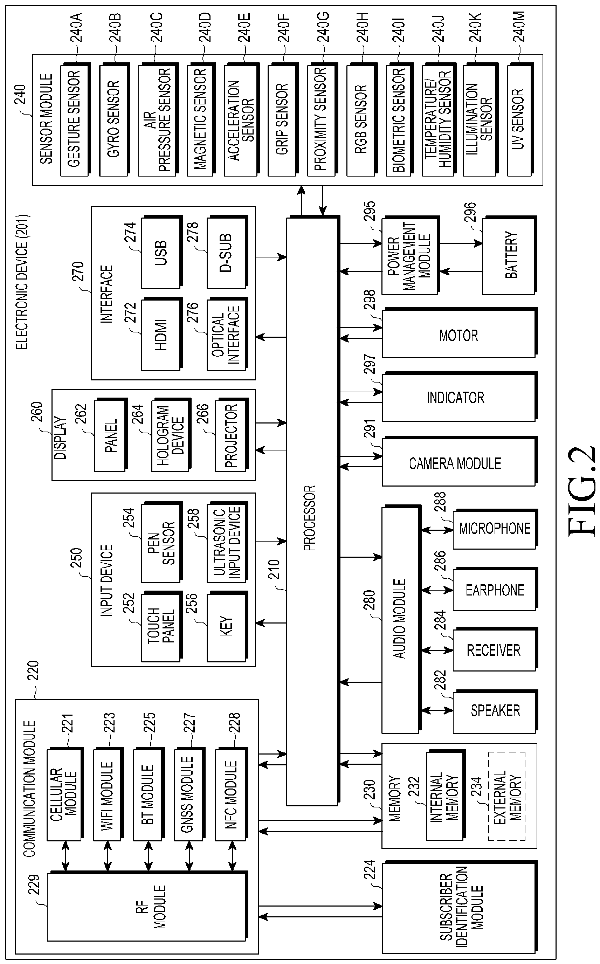

Fig. 2 is a block diagram illustrating an example configuration of an electronic device according to an example embodiment of the present disclosure.

Referring to Fig. 2, the electronic device 201 may include the whole or part of, e.g., the electronic device 101 shown in Fig. 1. The electronic device 201 may include one or more processors (e.g., application processors (APs)) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210 may control multiple hardware and software components connected to the processor 210 by running, e.g., an operating system or application programs, and the processor 210 may process and compute various data. The processor 210 may be implemented in, e.g., a system on chip (SoC). According to an embodiment of the present disclosure, the processor 210 may further include a graphic processing unit (GPU) or an image signal processor. The processor 210 may include at least some (e.g., the cellular module 221) of the components shown in Fig. 2. The processor 210 may load a command or data received from at least one of other components (e.g., a non-volatile memory) on a volatile memory, process the command or data, and store resultant data in the non-volatile memory.

The communication module 220 may have the same or similar configuration to the communication interface 170. The communication module 220 may include various communication circuitry, e.g., a cellular module 221, a wireless fidelity (Wi-Fi) module 223, a bluetooth (BT) module 225, a GNSS module 227, a NFC module 228, and a RF module 229. The cellular module 221 may provide voice call, video call, text, or Internet services through, e.g., a communication network. According to an embodiment of the present disclosure, the cellular module 221 may perform identification or authentication on the electronic device 201 in the communication network using a subscriber identification module 224 (e.g., the SIM card). According to an embodiment of the present disclosure, the cellular module 221 may perform at least some of the functions providable by the processor 210. According to an embodiment of the present disclosure, the cellular module 221 may include a communication processor (CP). According to an embodiment of the present disclosure, at least some (e.g., two or more) of the cellular module 221, the Wi-Fi module 223, the Bluetooth module 225, the GNSS module 227, or the NFC module 228 may be included in a single integrated circuit (IC) or an IC package. The RF module 229 may transmit and receive, e.g., communication signals (e.g., radio frequency (RF) signals).

The RF module 229 may include, e.g., a transceiver, a power amp module (PAM), a frequency filter, a low noise amplifier (LNA), or an antenna. According to an embodiment of the present disclosure, at least one of the cellular module 221, the Wi-Fi module 223, the bluetooth module 225, the GNSS module 227, or the NFC module 228 may communicate RF signals through a separate RF module.

The subscription identification module 224 may include, e.g., a card including a subscriber identification module, or an embedded SIM, and may contain unique identification information (e.g., an integrated circuit card identifier (ICCID) or subscriber information (e.g., an international mobile subscriber identity (IMSI)).

The memory 230 (e.g., the memory 130) may include, e.g., an internal memory 232 and/or an external memory 234. The internal memory 232 may include at least one of, e.g., a volatile memory (e.g., a dynamic RAM (DRAM), a static RAM (SRAM), a synchronous dynamic RAM (SDRAM), etc.) or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or solid-state drive (SSD). The external memory 234 may include a flash drive, e.g., a compact flash (CF) memory, a secure digital (SD) memory, a micro-SD memory, a min-SD memory, an extreme digital (xD) memory, a multi-media card (MMC), or a memory stick™. The external memory 234 may be functionally or physically connected with the electronic device 201 via various interfaces.

For example, the sensor module 240 may measure a physical quantity or detect a motion state of the electronic device 201, and the sensor module 240 may convert the measured or detected information into an electrical signal. The sensor module 240 may include at least one of, e.g., a gesture sensor 240A, a gyro sensor 240B, an atmospheric (e.g., air) pressure sensor 240C, a magnetic sensor 240D, an acceleration sensor 240E, a grip sensor 240F, a proximity sensor 240G, a color sensor 240H (e.g., a red-green-blue (RGB) sensor, a bio (e.g., biometric) sensor 2401, a temperature/humidity sensor 240J, an illumination sensor 240K, or an Ultra Violet (UV) sensor 240M. Additionally or alternatively, the sensing module 240 may include, e.g., an e-nose sensor, an electromyography (EMG) sensor, an electroencephalogram (EEG) sensor, an electrocardiogram (ECG) sensor, an infrared (IR) sensor, an iris sensor, or a finger print sensor. The sensor module 240 may further include a control circuit for controlling at least one or more of the sensors included in the sensing module. According to an embodiment of the present disclosure, the electronic device 201 may further include a processor configured to control the sensor module 240 as part of the processor 210 or separately from the processor 210, and the electronic device 2701 may control the sensor module 240 while the processor 1210 is in a sleep mode.

The input device 250 may include various input circuitry, e.g., a touch panel 252, a (digital) pen sensor 254, a key 256, or an ultrasonic input device 258, or the like. The touch panel 252 may use at least one of capacitive, resistive, infrared, or ultrasonic methods. The touch panel 252 may further include a control circuit. The touch panel 252 may further include a tactile layer to provide an immediate reaction to the user. The (digital) pen sensor 254 may include, e.g., part of the touch panel or a separate sheet for recognition. The key 256 may include e.g., a physical button, optical key or key pad. The ultrasonic input device 258 may sense an ultrasonic wave generated from an input tool through a microphone (e.g., the microphone 288) to identify data corresponding to the sensed ultrasonic wave.

The display 260 (e.g., the display 160) may include a panel 262, a hologram device 264, a projector 266, or a control circuit for controlling the same. The panel 262 may be implemented to be flexible, transparent, or wearable. The panel 262, together with the touch panel 252, may be configured in one or more modules. According to an embodiment of the present disclosure, the panel 262 may include a pressure sensor (or pose sensor) that may measure the strength of a pressure by the user's touch. The pressure sensor may be implemented in a single body with the touch panel 252 or may be implemented in one or more sensors separate from the touch panel 252. The hologram device 264 may make three dimensional (3D) images (holograms) in the air by using light interference. The projector 266 may display an image by projecting light onto a screen. The screen may be, for example, located inside or outside of the electronic device 201.

The interface 270 may include various input circuitry e.g., a high definition multimedia interface (HDMI) 272, a USB 274, an optical interface 276, or a D-subminiature (D-sub) 278, or the like. The interface 270 may be included in e.g., the communication interface 170 shown in Fig. 1. Additionally or alternatively, the interface 270 may include a mobile high-definition link (MHL) interface, a secure digital (SD) card/ multimedia card (MMC) interface, or infrared data association (IrDA) standard interface.

The audio module 280 may converting, e.g., a sound signal into an electrical signal and vice versa. At least a part of the audio module 280 may be included in e.g., the input/output interface 145 as shown in Fig. 1. The audio module 280 may process sound information input or output through e.g., a speaker 282, a receiver 284, an earphone 286, or a microphone 288.

For example, the camera module 291 may be a device for capturing still images and videos, and may include, according to an embodiment of the present disclosure, one or more image sensors (e.g., front and back sensors), a lens, an image signal processor (ISP), or a flash such as an LED or xenon lamp.

The power manager module 295 may manage power of the electronic device 201, for example. According to an embodiment of the present disclosure, the power manager module 295 may include a power management Integrated circuit (PMIC), a charger IC, or a battery or fuel gauge. The PMIC may have a wired or wireless recharging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging.

The battery gauge may measure an amount of remaining power of the battery 296, a voltage, a current, or a temperature while the battery 296 is being charged. The battery 296 may include, e.g., a rechargeable battery or a solar battery.

The indicator 297 may indicate a particular state of the electronic device 201 or a part (e.g., the processor 210) of the electronic device, including e.g., a booting state, a message state, or recharging state. The motor 298 may convert an electric signal to a mechanical vibration and may generate a vibrational or haptic effect. The electronic device 201 may include a mobile TV supporting device (e.g., a GPU) that may process media data as per, e.g., digital multimedia broadcasting (DMB), digital video broadcasting (DVB), or mediaFlo™ standards. Each of the aforementioned components of the electronic device may include one or more parts, and a name of the part may vary with a type of the electronic device. According to various embodiments, the electronic device (e.g., the electronic device 201) may exclude some elements or include more elements, or some of the elements may be combined into a single entity that may perform the same function as by the elements before combined.

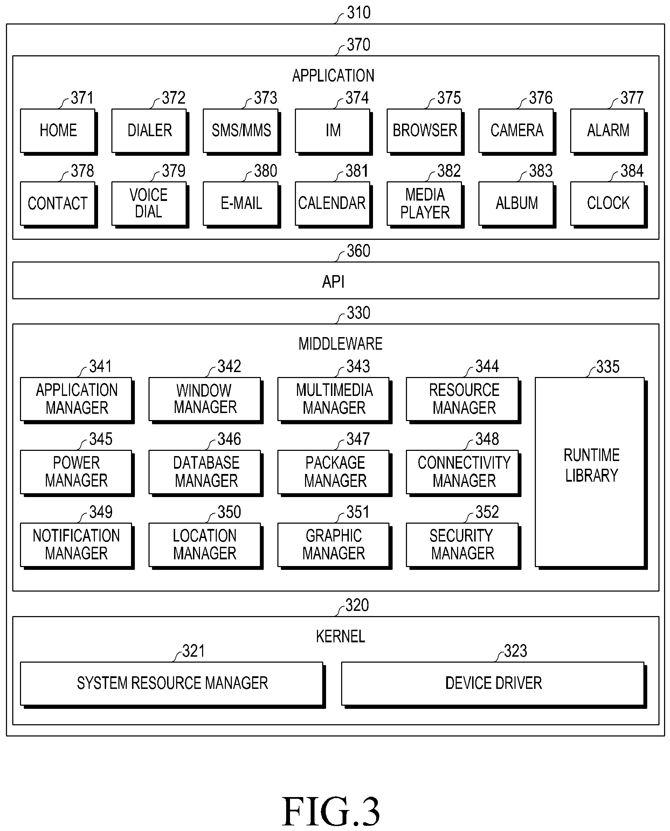

Fig. 3 is a block diagram illustrating an example program module configuration according to an example embodiment of the present disclosure.

According to an embodiment of the present disclosure, the program module 310 (e.g., the program 140) may include an operating system (OS) controlling resources related to the electronic device (e.g., the electronic device 101) or various applications (e.g., the application processor 147) driven on the operating system. The operating system may include, e.g., Android™, iOS™, Windows™, Symbian™, Tizen™, or Bada™. Referring to Fig. 3, the program module 310 may include a kernel 320 (e.g., the kernel 141), middleware 330 (e.g., the middleware 143), an API 360 (e.g., the API 145), or an application 370 (e.g., the application program 147). At least a part of the program module 310 may be preloaded on the electronic device or may be downloaded from an external electronic device (e.g., the electronic devices 102 and 104 or server 106).

The kernel 320 may include, e.g., a system resource manager 321 and/or a device driver 323. The system resource manager 321 may perform control, allocation, or recovery of system resources. According to an embodiment of the present disclosure, the system resource manager 321 may include a process managing unit, a memory managing unit, or a file system managing unit. The device driver 323 may include, e.g., a display driver, a camera driver, a bluetooth driver, a shared memory driver, a USB driver, a keypad driver, a Wi-Fi driver, an audio driver, or an inter-process communication (IPC) driver.

The middleware 330 may provide various functions to the application 370 through the API 360 so that the application 370 may use limited system resources in the electronic device or provide functions jointly required by applications 370. According to an embodiment of the present disclosure, the middleware 330 may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include a library module used by a compiler in order to add a new function through a programming language while, e.g., the application 370 is being executed. The runtime library 335 may perform input/output management, memory management, or arithmetic function processing. The application manager 341 may manage the life cycle of, e.g., the applications 370. The window manager 342 may manage GUI resources used on the screen. The multimedia manager 343 may grasp formats necessary to play media files and use a codec appropriate for a format to perform encoding or decoding on media files. The resource manager 344 may manage the source code or memory space of the application 370. The power manager 345 may manage, e.g., the capacity, temperature, or power of the battery and determine and provide power information necessary for the operation of the electronic device using a corresponding piece of information of such. According to an embodiment of the present disclosure, the power manager 345 may interwork with a basic input/output system (BIOS). The database manager 346 may generate, search, or vary a database to be used in the applications 370. The package manager 347 may manage installation or update of an application that is distributed in the form of a package file.

The connectivity manager 348 may manage, e.g., wireless connectivity. The notification manager 349 may provide an event, e.g., arrival message, appointment, or proximity alert, to the user. The location manager 350 may manage, e.g., locational information on the electronic device. The graphic manager 351 may manage graphic effects to be offered to the user and their related user interface. The security manager 352 may provide system security or user authentication, for example. According to an embodiment of the present disclosure, the middleware 330 may include a telephony manager for managing the voice or video call function of the electronic device or a middleware module able to form a combination of the functions of the above-described elements. According to an embodiment of the present disclosure, the middleware 330 may provide a module specified according to the type of the operating system. The middleware 330 may dynamically omit some existing components or add new components.

The API 360 may be a set of, e.g., API programming functions and may have different configurations depending on operating systems. For example, in the case of Android or iOS, one API set may be provided per platform, and in the case of Tizen, two or more API sets may be offered per platform.

The application 370 may include an application that may provide, e.g., a home 371, a dialer 372, an SMS/MMS 373, an instant message (IM) 374, a browser 375, a camera 376, an alarm 377, a contact 378, a voice dial 379, an email 380, a calendar 381, a media player 382, an album 383, and/or a clock 384. Additionally, though not illustrated, the application 370 may include various other applications, including, for example, and without limitation, a health-care (e.g., measuring the degree of workout or blood sugar), or provision of environmental information (e.g., provision of air pressure, moisture, or temperature information). According to an embodiment of the present disclosure, the application 370 may include an information exchanging application supporting information exchange between the electronic device and an external electronic device. Examples of the information exchange application may include, but is not limited to, a notification relay application for transferring specific information to the external electronic device, or a device management application for managing the external electronic device. For example, the notification relay application may transfer notification information generated by other application of the electronic device to the external electronic device or receive notification information from the external electronic device and provide the received notification information to the user. For example, the device management application may install, delete, or update a function (e.g., turn-on/turn-off the external electronic device (or some elements) or adjusting the brightness (or resolution) of the display) of the external electronic device communicating with the electronic device or an application operating on the external electronic device. According to an embodiment of the present disclosure, the application 370 may include an application (e.g., a health-care application of a mobile medical device) designated according to an attribute of the external electronic device. According to an embodiment of the present disclosure, the application 370 may include an application received from the external electronic device. At least a portion of the program module 310 may be implemented (e.g., executed) in software, firmware, hardware (e.g., the processor 210), or a combination of at least two or more thereof and may include a module, program, routine, command set, or process for performing one or more functions.

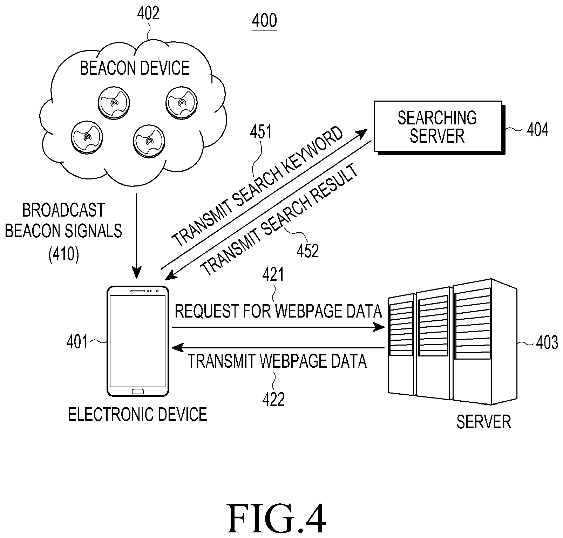

Fig. 4 is a diagram illustrating an example of various electronic devices in a network environment according to an example embodiment of the present disclosure.

Referring to Fig. 4, the network environment 400 may include an electronic device 401 (e.g., the electronic device 101 of Fig. 1 or the electronic device 201 of Fig. 2), at least one beacon device 402, and at least one server 403, 404 (e.g., the server 106 of Fig. 1). The components may be connected together via a wired/wireless network. The at least one server may include a server 403 and/or a searching server 404.

In operation 410, the at least one beacon device 402 may transmit or broadcast beacon signals. An electronic device (e.g., the electronic device 401) positioned within a predetermined distance (e.g., in the same building or area) from the at least one beacon device 402 may receive the beacon signal. For example, the beacon signal may include identification information (e.g., unique user identifier (UUID) or URL information). For example, the URL information may be one set by a server that provides a service related to the beacon signal.

According to an embodiment of the present disclosure, the electronic device 401 may access the server 403 corresponding to the URL information contained in the received beacon signal through a web browser application (e.g., the browser 375 of Fig. 3). For example, the electronic device 401 may access the server 403 corresponding to the URL information and display a webpage. The electronic device 401 may store the URL information or at least part of data of the webpage corresponding to the URL information.

According to an embodiment of the present disclosure, various applications (e.g., the browser 375 of Fig. 3) of the electronic device 401 may be configured with the functions of displaying the webpage and displaying information corresponding to the beacon signal previously received.

According to an embodiment of the present disclosure, where the data of the webpage for the URL information of a particular beacon signal cannot be identified, the electronic device 401 may send a message for requesting the webpage data for the URL information to a server 402 corresponding to the URL information in operation 421.

Although an example is described in which the electronic device 401 performs operation 421 for requesting the webpage data when it cannot identify the data of the webpage corresponding to the particular URL information according to an embodiment of the present disclosure, operation 421 may also be performed in other various contexts, e.g., when the URL information is identified as having been received, when it reaches a designated time period, when the communication state of the electronic device 401 is better than a designated communication state, or when a selection input for the information corresponding to the displayed beacon signal is identified.

In operation 422, the server 403 may transmit the requested data of the webpage corresponding to the URL information to the electronic device 401. For example, the data corresponding to the URL information may include the webpage that displays a coupon (e.g., a discount coupon) in a particular geographical location (e.g., bus stop or store) or data (e.g., an image, text, or voice) representing traffic information.

According to an embodiment of the present disclosure, the electronic device 401 may store at least of the data included in the webpage, as data related to the beacon signal. The beacon signal-related data may include service type, thumbnail images, service identification information, or service detail.

In operation 451, the electronic device 401 may transmit a search keyword to the searching server 404. For example, the search keyword may be one entered in various forms, e.g., characters, voice, or image, through the web browser application.

In operation 452, upon receiving the search keyword, the searching server 404 may identify information related to the search keyword, among the stored information, as a search result, and transmit the same to the electronic device 401.

According to an embodiment of the present disclosure, the electronic device 401 may further include at least part of the data related to the stored beacon signal in the received search result and display them. For example, the electronic device 401 may further include data related to the search keyword among the data related to the stored beacon signal in the search result for the search keyword and display them.

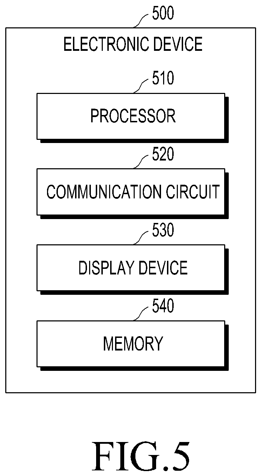

Fig. 5 is a block diagram illustrating an example configuration of an electronic device according to an example embodiment of the present disclosure.

Referring to Fig. 5, an electronic device 500 (e.g., the electronic device 101 of Fig. 1, the electronic device 201 of Fig. 2, or the electronic device 401 of Fig. 4) may include a processor (e.g., including processing circuitry) 510 (e.g., the processor 120 of Fig. 1 or the processor 210 of Fig. 2), a communication circuit 520 (e.g., the communication interface 170 of Fig. 1 or the communication module 220 of Fig. 2), a display device 530 (e.g., the display of Fig. 1 or the display 260 of Fig. 2), and a memory 540 (e.g., the memory 130 of Fig. 1 or the memory 230 of Fig. 2).

The processor 510 may include various processing circuitry and control the overall operation of the electronic device 500.

According to an embodiment of the present disclosure, the processor 510 may execute a web browser application (e.g., the browser 375 of Fig. 3), and the processor 510 may display data for the received beacon signal or perform a searching function through the web browser application. For example, the searching function may be searching for part of information stored in an external electronic device or data for the beacon signal previously accessed in relation to the search keyword entered through the web browser application.

According to an embodiment of the present disclosure, the processor 510 may output the search result for the search keyword entered through the web browser application. For example, the search result may include information about the beacon signal related to the search keyword among beacon signals previously received and the information elated to the search keyword among pieces of information stored in the external electronic device.

According to an embodiment of the present disclosure, the processor 510 may include various processing circuitry, such as, for example, and without limitation, one or more of a general-purpose processor capable of executing instructions stored in the memory 540 or a dedicated processor (e.g., an embedded processor) for performing particular operations (e.g., receiving a beacon signal or displaying and storing information corresponding to the received beacon signal), or the like.

The communication circuit 520 may include various communication circuitry and perform short-range communication and receive beacon signals broadcast from a short-range communication device (e.g., a beacon device). For example, the beacon signal may include at least one of identification information and URL information.

When a web browser application is executed, the display device 530 may display the screen of the particular web browser application.

The memory 540 may store at least one of the identification information and URL information about the received beacon signal, transmit the URL information of the beacon signal to an external electronic device (e.g., the server 106 of Fig. 1), and obtain data related to the received beacon signal. For example, the beacon signal-related data may include information about the location where the beacon signal has been transmitted, service type, time information, or information about the store where the beacon signal has been transmitted. The beacon signal-related data may also include other various types of information.

According to an embodiment of the present disclosure, the location information may be information related to the location where the beacon signal-related service is provided, and the location information may include, e.g., GPS information, building name information, or address information. The service type may be the type of a service obtained by accessing the URL contained in the beacon signal, and the service type may include, e.g., discount or coupon service or realtime traffic information. The time information may include, e.g., information about the time when the beacon signal was received or the time when the discount or coupon service expires. The store information may include, e.g., store classification information or information about goods (e.g., foods or clothes) that a particular store is selling.

According to an embodiment of the present disclosure, the memory 540 may store instructions which when executed by the processor, enable the processor 510 of the electronic device 500 to cause the electronic device to store one or more data items received through a beacon signal using a wireless communication circuit (e.g., the communication circuit 520), obtain information related to at least one data item related to a keyword search requested among the one or more stored data items corresponding to a keyword search request, and display at least part of the obtained information on a screen.

According to an embodiment of the present disclosure, the instructions may include instructions to enable the processor 510 to transmit information about the search-requested keyword to a searching server and display on the screen a search result for the search-requested keyword received from the searching server.

According to an embodiment of the present disclosure, the instructions may include instructions to enable the processor 510 to display a message indicating that the beacon signal is received and send a request for information related to the at least one data item to an external electronic device according to an input to the message.

According to an embodiment of the present disclosure, the instructions may include instructions to enable the processor 510 to access a URL contained in the beacon signal to identify data contained in a webpage displayed and store part of the identified data contained in the webpage as data received through the beacon signal.

According to an embodiment of the present disclosure, the instructions may include instructions to enable the processor 510 to identify the data contained in the webpage to store data representing a service detail, location information, identification information, or a thumbnail image indicating the type of a service of the beacon signal.

According to an embodiment of the present disclosure, the instructions may include instructions to enable the processor 510 to identify, as the obtained information, data containing the service detail, location information, and identification information related to the search-requested keyword among the data items stored through the received beacon signal, corresponding to the keyword search request.

According to an embodiment of the present disclosure, the instructions may include instructions to enable the processor 510 to identify information about a time when the beacon signal is received corresponding to at least part of the obtained information and display, on the screen, the at least part of the obtained information in the latest order of receipt based on the time information.

According to an embodiment of the present disclosure, the instructions may include instructions to enable the processor 510 to identify information about a location where the beacon signal corresponding to at least part of the obtained information is broadcast among the obtained information and display, on the screen, the at least part of the obtained information in the closest order of broadcast based on the location information.

According to an embodiment of the present disclosure, the instructions may include instructions to enable the processor to display, on the screen, information related to data broadcast within a predetermined distance (e.g., in the same building) from the electronic device among the obtained information based on the location information.

According to an embodiment of the present disclosure, the instructions may include instructions to enable the processor 510 to store, in the memory, data indicating the service detail or the service type, and when the data contained in the webpage includes the data indicating the service type or the service detail, display the data indicating the service type or the service detail as at least part of the obtained information.

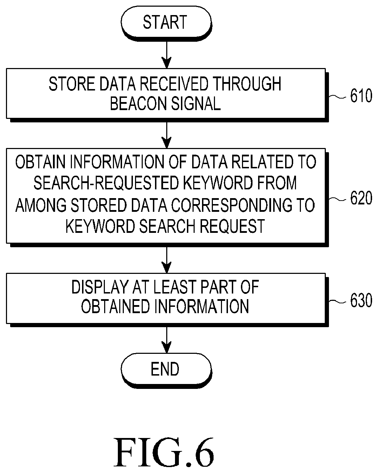

Fig. 6 is a flowchart illustrating an example operation of searching based on information corresponding to a stored beacon signal by an electronic device according to an example embodiment of the present disclosure.

Referring to Fig. 6, in operation 610, a processor (e.g., the processor 120 of Fig. 1, the processor 210 of Fig. 2, or the processor 510 of Fig. 5) of an electronic device (e.g., the electronic device 101 of Fig. 1, the electronic device 201 of Fig. 2, or the electronic device 500 of Fig. 5) may perform control to store at least part of data received through a beacon signal. The beacon signal may be broadcast from, e.g., a short-range communication device, and the beacon signal may include URL information.

In operation 620, the processor of the electronic device may perform control to obtain information of data related to the search-requested keyword from among the stored data, corresponding to the keyword search request. For example, the keyword-related information may include text data or image data contained in the webpage obtained by accessing the address corresponding to the URL information.

In operation 630, the processor of the electronic device may perform control to display at least part of the obtained information. For example, the at least part of the information may include the information related to the service provided from the webpage and image data (e.g., thumbnails) of the webpage.

According to an embodiment of the present disclosure, the processor of the electronic device may be a general-purpose processor capable of performing the above-described operations. The electronic device may perform control to perform at least some of the above-described operations through a communication circuit (e.g., the communication interface 170 of Fig. 1, the communication module 220 of Fig. 2, or the communication circuit 530 of Fig. 5) or a display device (e.g., the display 160 of Fig. 1, the display 260 of Fig. 2, or the display device 530).

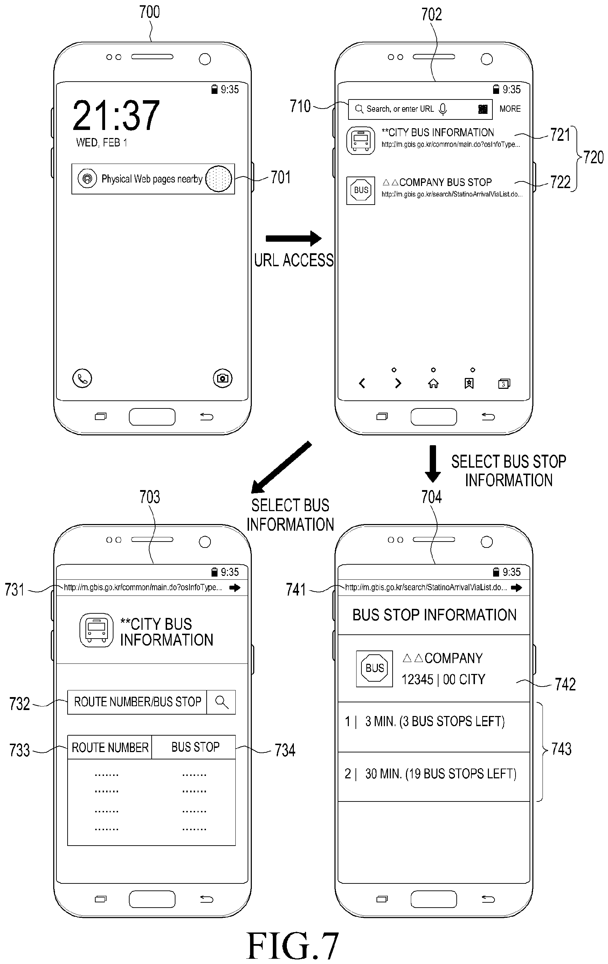

Fig. 7 is a diagram illustrating an example screen configuration of displaying information corresponding to a received beacon signal by an electronic device according to an example embodiment of the present disclosure.

Referring to Fig. 7, upon receiving a beacon signal broadcast from at least one beacon device, an electronic device 700 (e.g., the electronic device 101 of Fig. 1, the electronic device 201 of Fig. 2, the electronic device 401 of Fig. 4, or the electronic device 500 of Fig. 5) may display, through the display, a message 701 indicating that the beacon signal is received.

According to an embodiment of the present disclosure, when the electronic device 700 receives the message 701 in, for example, a lock (or hold) state or with the display stopped from operation, the message 701 may be displayed through the lock screen.

According to an embodiment of the present disclosure, upon identifying a user input (e.g., a touch input) to the message, the electronic device 700 may display, through the screen 702 of a web browser application (e.g., the browser 375), a webpage corresponding to the URL information of the received beacon signal. For example, the electronic device 700 may be set not to display the message 702 upon entry of a designated user input (e.g., a gesture input) to the message 702.

According to an embodiment of the present disclosure, the application screen 702 may display a window 710 for entry of a search keyword or URL information and a list 720 of beacon signals received. For example, the beacon signal list 720 may include selection items (e.g., a first selection item 721 or a second selection item 722) for displaying a webpage that provides local (e.g., '** metro-city') bus information or bus arrival information about a particular bus stop (e.g., bus stop before 'Δ Δ Corporation').

According to an embodiment of the present disclosure, the electronic device 700 may send a request for data for the thumbnail images, item names, and item details displayed on the selection items of the beacon signal list 720 to a server (e.g., the server 106 of Fig. 1 or the server 403 of Fig. 4) and receive the data. The request for data may be sent to the server when entry of a designated input to the message 701 is identified or when a designated number of beacon signals are received within a predetermined time. Or, the electronic device 700 may be set to send a request and receive data for the beacon signal at a particular time depending on the communication state and scheme of the electronic device 700.

According to an embodiment of the present disclosure, upon identifying that the first selection item 721 is selected from the beacon signal list 720, the electronic device 700 may display a first webpage 703 using the URL information contained in the first beacon signal corresponding to the first selection item 721. The first webpage 703 may include the URL information 731 contained in the first beacon signal, service identification information (e.g., '** city bus information'), a search window 732 for searching for route number/bus stop, or an area 734 for displaying the results of search as per the search keyword entered to the search window 732.

According to an embodiment of the present disclosure, upon identifying that the second selection item 722 is selected from the beacon signal list 720, the electronic device 700 may display a second webpage 704 using the URL information contained in the second beacon signal corresponding to the second selection item 722. The second webpage 704 may include the URL information 741 contained in the second beacon signal, service identification information 742 (e.g., Δ Δ bus stop located in oo city') and information 743 about a bus (e.g., 'Bus No. 1' or 'Bus No. 2') scheduled to arrive at the bus stop.

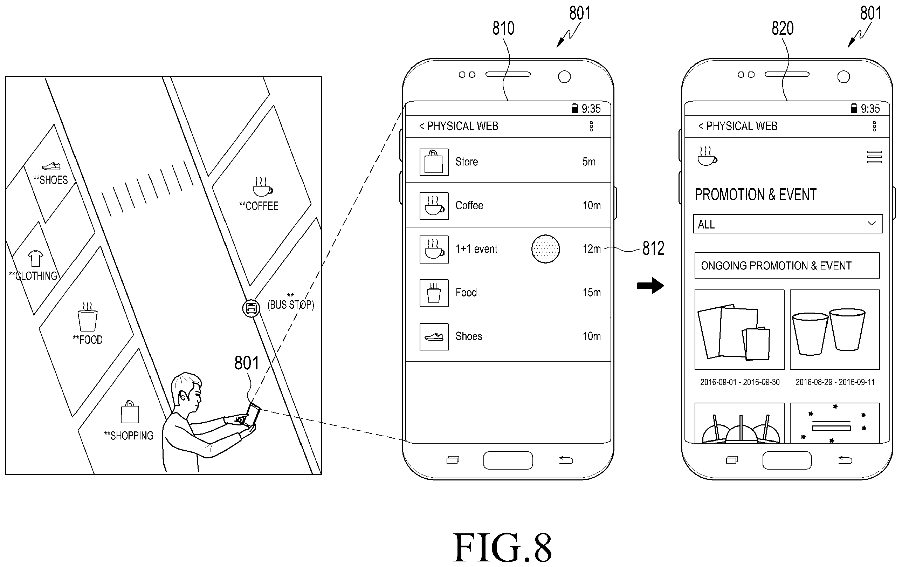

Fig. 8 is a diagram illustrating an example screen configuration of displaying and searching for information about a received beacon signal by an electronic device according to an example embodiment of the present disclosure.

Referring to Fig. 8, when an electronic device 801 (e.g., the processor 120 of Fig. 1, the processor 210 of Fig. 2, or the processor 510 of Fig. 5) is located within a particular distance, the electronic device 801 may receive a broadcast beacon signal including information about a store or particular place located within the distance, or the distance, from a beacon device installed in the store or place. For example, the store may include a coffee shop, clothing shop, or restaurant. For example, the particular place may include a building, museum, stadium, department store, shopping center, mart, or bus stop.

According to an embodiment of the present disclosure, the electronic device 801 may display the received beacon information. According to an embodiment of the present disclosure, the electronic device 801 may display the information corresponding to the received beacon signal through the screen 810 of various applications configued with the functionality of displaying the information corresponding to the beacon signal stored in the web browser application (e.g., the browser 375) or the electronic device 801. The information corresponding to the beacon signal may include, e.g., a thumbnail image indicating the service of the received beacon signal and information indicating the service detail.

According to an embodiment of the present disclosure, the electronic device 801 may access the webpage corresponding to the URL information using the URL information contained in the particular beacon signal through the web browser application. For example, the electronic device 801 may receive information associated with the beacon signal from the accessed webpage. As another example, the electronic device 801 may send the URL information contained in the received beacon signal to a server configured to process the information contained in the beacon signal, and the electronic device 801 may receive information indicating the service detail and the thumbnail image from the server.

According to an embodiment of the present disclosure, the electronic device 801 may store the received data based on the URL information contained in the beacon signal. For example, the electronic device 801 may store the data corresponding to the URL information received from the server configured to process the information contained in the beacon signal or the data contained in the webpage corresponding to the URL information. For example, the stored beacon signal-related information may be displayed through various applications (e.g., the browser 375) of the electronic device 801.

According to an embodiment of the present disclosure, upon identifying entry of an input (e.g., a touch input) to first information 812 (e.g., '1+1 event') from among the information corresponding to the received beacon signal displayed on the screen 810, the electronic device 801 may access the URL corresponding to the beacon signal corresponding to the input-entered information.

According to an embodiment of the present disclosure, in response to the input, the electronic device 801 may switch the screen 810 of the web browser application to a webpage 820 corresponding to the URL information and display the webpage 820. The webpage 820 may include, e.g., information related to an event or promotion in the place (e.g., coffee shop) where teh beacon signal has been transmitted.

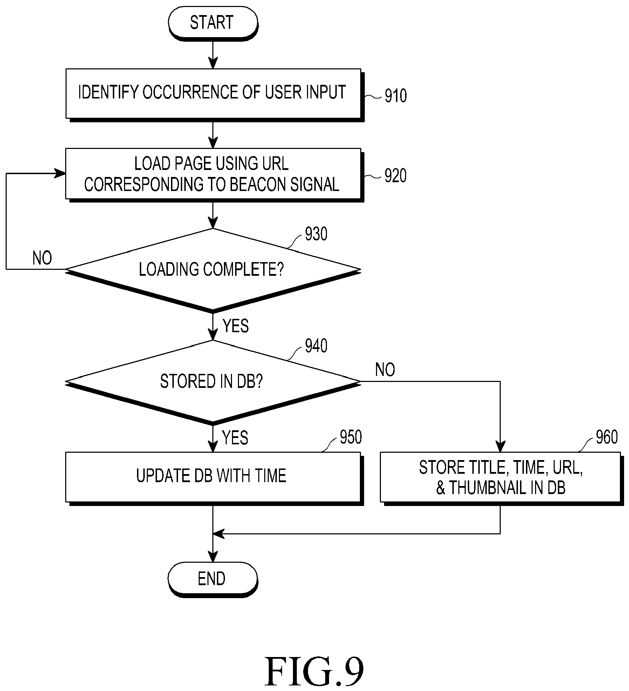

Fig. 9 is a flowchart illustrating an example operation of storing information corresponding to a beacon signal by an electronic device according to an example embodiment of the present disclosure.

According to an embodiment of the present disclosure, upon receiving a beacon signal broadcast from at least one beacon device, an electronic device (e.g., the electronic device 101 of Fig. 1, the electronic device 201 of Fig. 2, the electronic device 401 of Fig. 4, or the electronic device 500 of Fig. 5) may display a message indicating information corresponding to the received beacon signal. For example, where an application capable of processing the information contained in the beacon signal or a designated menu is executed on a web browser application (e.g., the browser 375), the electronic device may display the information corresponding to the beacon signal previously received through the application or the menu executed.

Referring to Fig. 9, in operation 910, the electronic device may identify the occurrence of a designated user input (e.g., a touch or drag input) to the information about the first beacon signal among the information about the beacon signal.

In operation 920, the electronic device may load the page using the URL information corresponding to the first beacon signal upon receiving the first beacon signal. For example, the electronic device may access the URL contained in the first beacon signal to load the data contained in the webpage.

Although the embodiment has been described in which the electronic device loads page as there is an input to the information corresponding to the particular beacon signal, the page loading operation may also be performed, e.g., when it reaches a designated time period, upon determining that a designated number of beacon signals are received, or in other various contexts. In this case, the electronic device may perform control to skip operation 910 while performing operation 920.

According to an embodiment of the present disclosure, the page loading operation may include determining whether the URL information is URL information contained in the beacon signal, loading and parsing the main resource for the webpage, and when a sub resource constituting the main resource is identified while parsing, loading the sub resource. The main resource and the sub resource may include layout information, java script execution information, and display information.

In operation 930, the electronic device may determine whether loading the webpage is complete.

Upon determining in operation 930 that the page loading is incomplete, the electronic device may repeat operation 920 to perform page loading.

Upon determining in operation 930 that the page loading is complete, the electronic device, in operation 940, may determine whether the information about the beacon signal that the page loading has been complete and the information corresponding to the beacon signal are stored in the database. The database may be one included in the memory of the electronic device or one included in an external server connected with the electronic device. For example, the information corresponding to the beacon signal may include a thumbnail image indicating the service of the received beacon signal or information indicating the service detail.

Upon determining in operation 940 that the beacon signal information and the information corresponding to the beacon signal are stored in the database, the electronic device, in operation 950, may update the previously stored information with the received information.

Upon determining in operation 940 that the beacon signal and beacon signal-corresponding information are not stored in the database, the electronic device, in operation 960, may store, in the database, the title of the service related to the beacon signal, current time information, URL information contained in the beacon signal, or thumbnail image indicating the service or the type of service. For example, the service title may include the information about the store or location where the beacon signal has been broadcast.

According to an embodiment of the present disclosure, the electronic device may identify the service type (e.g., discount service, advertisement service, or traffic information service) based on the data (e.g., data ('discount,' 'coupon,' or 'bus arrival time') indicating a particular service) contained in the webpage obtained by accessing the URL corresponding to the beacon signal. The electronic device may determine the service detail by identifying the data (e.g., '30% off,' or 'arrive after ...minutes') related to the service.

According to an embodiment of the present disclosure, the information corresponding to the beacon signal may incude the data contained in the webpage corresponding to the URL information. The webpage may include data indicating discount, advertisement information, or traffic information related to the location where the beacon signal has been transmitted.

According to an embodiment of the present disclosure, the electronic device may perform control to perform the above-described operations through a general-purpose processor or to perform at least some of the above-described operations through a communication circuit (e.g., the communication interface 170 of Fig. 1, the communication module 220 of Fig. 2, or the communication circuit 530 of Fig. 5) or a display device (e.g., the display 160 of Fig. 1, the display 260 of Fig. 2, or the display device 530).

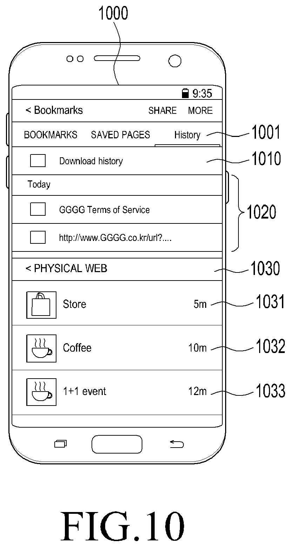

Fig. 10 is a diagram illustrating an example screen configuration of displaying information corresponding to a stored beacon signal by an electronic device according to an example embodiment of the present disclosure.

Fig. 10 shows a screen 1000 of a web browser application executed on an electronic device (e.g., the electronic device 101 of Fig. 1, the electronic device 201 of Fig. 2, the electronic device 401 of Fig. 4, or the electronic device 500 of Fig. 5). The web browser application may provide the function of displaying information corresponding to the stored beacon signal.

According to an embodiment of the present disclosure, the screen 1000 of the web browser application may include bookmarks, buttons providing saved pages and history functionality, and a display area, or the like, where data corresponding to a particular button among the buttons is displayed when the particular button is selected. For example, upon identifying a touch input to the history button 1001, the display area may display a download history 1010 through the web browser application, a history 1020 of webpages open today, and information 1030 corresponding to the stored beacon signal.

The beacon signal-corresponding information 1030 may include information about a first beacon signal 1031 broadcast from G shop and information about a second and third beacon signal 1032 and 1033 broadcast from S coffee shop. The beacon signal information contained in the beacon signal-corresponding information 1030 may be arrayed in the latest order of reception or in the closest order of transmission from the current location of the electronic device. The electronic device may set various arrangements depending on the beacon signal-corresponding information.

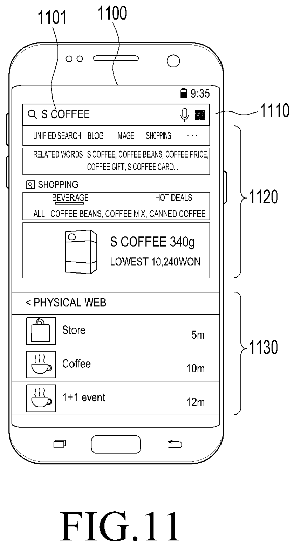

Fig. 11 is a diagram illustrating an example screen configuration of displaying a search result using a web browser application based on a beacon signal by an electronic device according to an example embodiment of the present disclosure.

According to an embodiment of the present disclosure, when a search function is executed through the web browser application, an electronic device (e.g., the electronic device 101 of Fig. 1, the electronic device 201 of Fig. 2, the electronic device 401 of Fig. 4, or the electronic device 500 of Fig. 5) may display search results and information corresponding to beacon signal on the application execution screen.

Referring to Fig. 11, when the web browser application is executed on the electronic device, the screen 1100 of the web browser application may include a search window 1110, an area 1120 for displaying the results of search requested by a search service server, and an area 1130 for displaying information corresponding to beacon signal.

The search window 1110 may include a search keyword input area and a search button. When the search keyword input area is activated to display a cursor, the search keyword 1101 entered in various types may be displayed. The search keyword 1101 may be entered as various types of data, e.g., text, voice, or image.

According to an embodiment of the present disclosure, upon identifying the selection of the search button by an input (e.g., a touch input), the electronic device may transmit data indicating 'S coffee' entered to the search service server and receive a result of the search. For example, the search result may include keywords and shopping information associated with 'S coffee.'

According to an embodiment of the present disclosure, the electronic device may search for information of the beacon signal containing the data corresponding to the search keyword 1101 among the information corresponding to the stored beacon signal. For example, the electronic device may search for the information of the beacon signal containing the information related to 'S coffee' in at least part of the information corresponding to the beacon signal stored in the electronic device.

According to an embodiment of the present disclosure, the searched beacon signal information may include information about a first beacon signal received from the store or coffee shop selling 'S coffee' or information about a second beacon signal received from a particular location related to advertisement information (e.g., '1+1 event'). The electronic device may display, on the area 1130 for displaying beacon signal-corresponding information, the thumbnail image indicating the type of service related to the searched beacon signal information, identification information, or information about the distance between the electronic device and the location where the particular beacon signal has been transmitted.

According to an embodiment of the present disclosure, the electronic device may display the searched beacon signal-corresponding information based on the distance from the electronic device (e.g., display the information on a higher part as the distance from the electronic device reduces). For example, the electronic device may display the 'store' information transmitted 5m away from the electronic device, the 'coffee' information transmitted 10m away from the electronic device, and the '1+1 event' information transmitted 12m away from the electronic device in the order thereof.

According to an embodiment of the present disclosure, upon identifying the search information about the search keyword, the electronic device may display the information about the beacon signal related to the search keyword among the beacon signals previously received, as well as the search result from the search service server.

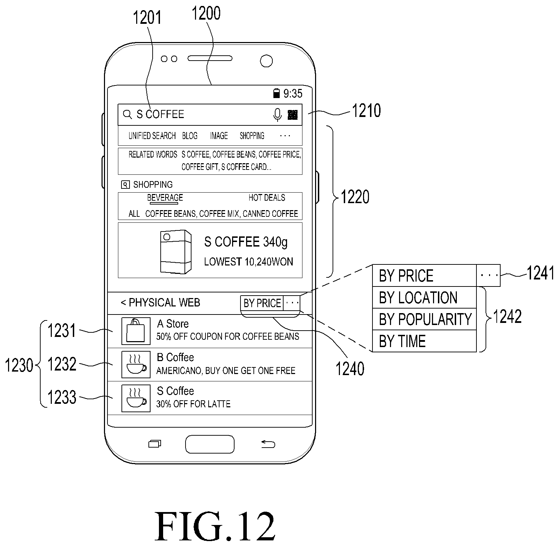

Fig. 12 is a diagram illustrating an example screen configuration of displaying a search result using a web browser application based on a beacon signal by an electronic device according to an example embodiment of the present disclosure.

According to an embodiment of the present disclosure, when a search function is executed through the web browser application, an electronic device (e.g., the electronic device 101 of Fig. 1, the electronic device 201 of Fig. 2, the electronic device 401 of Fig. 4, or the electronic device 500 of Fig. 5) may display search results and information corresponding to beacon signal on the application execution screen.

Referring to Fig. 12, when the web browser application is executed on the electronic device, the screen 1200 of the web browser application may include a search window 1210, an area 1220 for displaying the results of search requested by a search service server, and an area 1230 for displaying information corresponding to beacon signal.

According to an embodiment of the present disclosure, upon identifying entry of a search keyword 1201 (e.g., 'S coffee') to the search window 1210 and the selection of the search button, the electronic device may transmit data indicating 'S coffee' entered as the search keyword 1201 to the search service server and receive a result of the search. For example, the search result may include keywords and shopping information associated with 'S coffee.'

According to an embodiment of the present disclosure, the electronic device may display information (e.g., 1231, 1232, or 1233) corresponding to the beacon signal containing data corresponding to the search keyword 1201 and sorting reference selection item 1240 on the area 1230 for displaying the information corresponding to the beacon signal. For example, the beacon signal-corresponding information (e.g., 1231, 1232, or 1233) may include first 1231 including information about the discount provided by the store (e.g., 'A store') selling products related to 'S coffee', second information 1232 including information (e.g., buy one get one free for Americano) about the event provided by the coffee shop (e.g., 'B coffee') selling 'S coffee', or third information 1233 including information (e.g., 'Now 30% off for latte') about the discount provided by the coffee shop (e.g., 'C coffee') selling 'S coffee').

According to an embodiment of the present disclosure, the electronic device may display, on the area 1230 for displaying the beacon signal-corresponding information, the thumbnail image indicating the service type among the searched beacon signal-corresponding information, identification information (e.g., 'A store,' 'B coffee,' or 'C coffee') or service detail (e.g., '50% off coupon for coffee beans,' 'buy one get one free for Americano,' or '30% off for latte).

According to an embodiment of the present disclosure, the beacon signal-corresponding information may be sorted and displayed according to the reference selected through the sorting reference selection item 1240. The set sorting reference and list display button 1241 may be displayed on the sorting reference selection item 1240. For example, upon identifying the selection of the list display button 1241, the electronic device may display a list 1242 for selecting, e.g., price, location, popularity, or order of reception, and the electronic device may rearrange and display the beacon signal-corresponding information as per the selected reference.

According to an embodiment of the present disclosure, the electronic device may analyze the text data contained in the information corresponding to the stored beacon signal, extract discount, event, or coupon-related particular keyword (e.g., 'discount,' 'sale,' or 'free') or price information (e.g., discount rate or discounted price), and sort the beacon signal-corresponding information in order of price as per the extracted keyword and price information.

According to an embodiment of the present disclosure, the electronic device may send a request for access information about URL information corresponding to the stored beacon signal to a server (e.g., the server 403 of Fig. 4, search server 404, search service server or beacon server) and receive information about the number of times of access to the address corresponding to the particular URL by multiple electronic devices in a particular location. For example, the electronic device may sort the beacon signal-corresponding information in order of popularity based on the number of times of access.

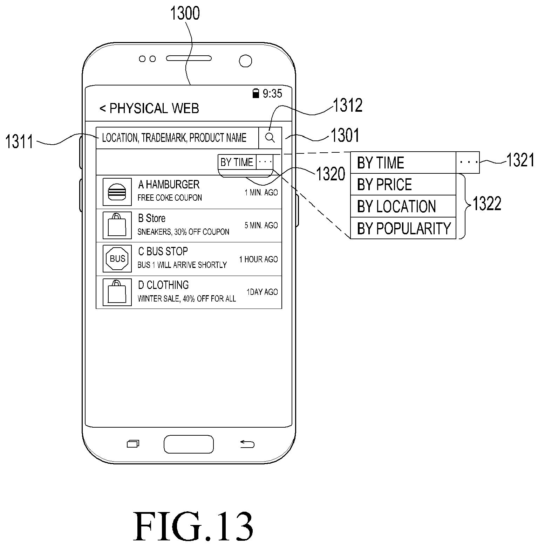

Fig. 13 is a diagram illustrating an example screen configuration of displaying and searching for information corresponding to a received beacon signal by an electronic device according to an example embodiment of the present disclosure.

According to an embodiment of the present disclosure, an electronic device (e.g., the electronic device 101 of Fig. 1, the electronic device 201 of Fig. 2, the electronic device 401 of Fig. 4, or the electronic device 500 of Fig. 5) may select a message displayed on the lock screen or execute the web browser application, displaying the information about the received beacon signal. For example, upon receiving the beacon signal with the display stopped from operation, the electronic device may display the lock screen and display, on the lock screen, a message indicating that the beacon signal is received.

Referring to Fig. 13, the electronic device may display, on the screen 1300 displaying the beacon signal-corresponding information, a search window 1301 for searching for the beacon signal-corresponding information, a sorting reference selection item 1320, and the searched beacon signal-corresponding information.

The search window 1301 may include an area 1311 for entering search keyword and a search button 1312. Information related to location, trademark, or product name may be entered through the search keyword. For example, upon identifying entry of selection of the search button 1312, the electronic device may search for the information corresponding to the beacon signal containing the information related to the product name or trademark entered to the search keyword or received from a particular location among the information corresponding to the stored beacon signal.

According to an embodiment of the present disclosure, the beacon signal-corresponding information may be sorted and displayed according to the reference selected through the sorting reference selection item 1320. The set sorting reference and list display button 1321 may be displayed on the sorting reference selection item 1320. For example, upon identifying the selection of the list display button 1321, the electronic device may display a list 1322 for selecting, e.g., price, location, popularity, or order of reception, and the electronic device may rearrange and display the beacon signal-corresponding information as per the selected reference.

According to an embodiment of the present disclosure, upon identifying that the 'latest order' is selected from among the sorting references, the electronic device may arrange and display the searched beacon signal-corresponding information according to the times when the beacon signals are received by the electronic device. For example, the electronic device may sort the beacon signal-corresponding information in the latest order, e.g., in the order of the coupon information received from 'A hamburger' one minute ago, coupon information received from 'B store' five minutes ago, traffic information received from 'C bus stop' one hour ago, and sale information received from 'D clothing' one day ago.

According to an embodiment of the present disclosure, the beacon signal-corresponding information may include thumbnail image, identification information, and service detail. The electronic device may identify the data contained in the webpage corresponding to the URL information contained in each beacon signal, identifying the thumbnail image, identification information, and service detail.

The term 'module' may refer, for example, to a unit including one of hardware, software, and firmware, or any combination thereof. The term 'module' may be interchangeably used with a unit, logic, logical block, component, or circuit. The module may be a minimum unit or part of an integrated component. The module may be a minimum unit or part of performing one or more functions. The module may be implemented mechanically or electronically. For example, the module may include, for example, and without limitation, at least one of a dedicated processor, a CPU, Application Specific Integrated Circuit (ASIC) chips, Field Programmable Gate Arrays (FPGAs), or Programmable Logic Arrays (PLAs) that perform some operations, or the like, which have already been known or will be developed in the future.

According to an embodiment of the present disclosure, at least a part of the device (e.g., modules or their functions) or method (e.g., operations) may be implemented as instructions stored in a computer-readable storage medium e.g., in the form of a program module. The instructions, when executed by a processor (e.g., the processor 120), may enable the processor to carry out a corresponding function. The computer-readable storage medium may be e.g., the memory 130.

The computer-readable storage medium may include a hardware device, such as hard discs, floppy discs, and magnetic tapes (e.g., a magnetic tape), optical media such as compact disc ROMs (CD-ROMs) and digital versatile discs (DVDs), magneto-optical media such as floptical disks, ROMs, RAMs, flash memories, and/or the like. Examples of the program commands may include not only machine language codes but also high-level language codes which are executable by various computing means using an interpreter. The aforementioned hardware devices may be configured to operate as one or more software modules to carry out exemplary embodiments of the present disclosure, and vice versa.

Modules or program modules in accordance with various embodiments of the present disclosure may include at least one or more of the aforementioned components, omit some of them, or further include other additional components. Operations performed by modules, program modules or other components in accordance with various embodiments of the present disclosure may be carried out sequentially, simultaneously, repeatedly, or heuristically. Furthermore, some of the operations may be performed in a different order, or omitted, or include other additional operation(s).

According to an embodiment of the present disclosure, there is provided a storage medium storing commands that are executed by at least one processor to enable the at least one processor to perform at least one operation that comprise storing one or more data items received through a beacon signal using the wireless communication circuit, obtaining information related to at least one data item related to a keyword search requested among the one or more stored data items corresponding to a keyword search request, and displaying at least part of the obtained information on a screen.

As is apparent from the foregoing description, according to embodiments of the present disclosure, an electronic device and a beacon-based searching method by the electronic device may store information corresponding to a received beacon signal and data contained in a webpage corresponding to the beacon signal and provide various search results for a keyword search request based on the stored data.

The various example embodiments disclosed and described herein are proposed for description and understanding of the disclosed technology and does not limit the scope of the present disclosure. Accordingly, the scope of the present disclosure should be understood as including all changes or various embodiments based on the technical spirit of the present disclosure.

## Claims

1. An electronic device, comprising:
a wireless communication circuit;
at least one processor electrically connected with the wireless communication circuit; and
a memory electrically connected with the processor, wherein the memory stores instructions, which when executed by the processor, cause the electronic device to store one or more data items received through a beacon signal using the wireless communication circuit, to obtain information related to at least one data item related to a keyword search requested from among the one or more stored data items corresponding to a keyword search request, and to display at least part of the obtained information on a screen.

2. The electronic device of claim 1, wherein the instructions when executed by the processor, cause the electronic device to transmit information about the search-requested keyword to a searching server and to display on the screen a search result for the search-requested keyword received from the searching server.

3. The electronic device of claim 1, wherein the instructions, when executed by the processor, cause the electronic device to display a mesage indicating that the beacon signal is received and to send a request for information related to the at least one data item to an external electronic device based on an input corresponding to the message.

4. The electronic device of claim 1, wherein the instructions when executed by the processor, cause the electronic device to:
access a uniform/universal resource locator (URL) included in the beacon signal to identify data included in a displayed webpage,
store part of the identified data included in the webpage as data received through the beacon signal, and
identify the data contained in the webpage to store data representing at least one of: a service detail, location information, identification information, and a thumbnail image indicating the type of a service of the beacon signal.

5. The electronic device of claim 4, wherein the instructions when executed by the processor, cause the electronic device to identify, as the obtained information, data containing one or more of the service detail, location information, and/or identification information related to the search-requested keyword from among the data items stored through the received beacon signal, corresponding to the keyword search request.

6. The electronic device of claim 1, wherein the instructions when executed by the processor, cause the electronic device to identify information about a time when the beacon signal is received corresponding to at least part of the obtained information and to display, on the screen, the at least part of the obtained information in an order of receipt based on the time information.

7. The electronic device of claim 1, wherein the instructions when executed by the processor, cause the electronic device to:
identify information about a location where the beacon signal corresponding to at least part of the obtained information is broadcast from among the obtained information,
display, on the screen, the at least part of the obtained information in an order of closest broadcast based on the location information and
display, on the screen, information related to data broadcast within a predetermined distance from the electronic device from among the obtained information based on the location information.

8. The electronic device of claim 4, wherein the instructions when executed by the processor, cause the electronic device to store, in the memory, data indicating the service detail and/or the service type, and when the data inlcuded in the webpage includes the data indicating the service type and/or the service detail, to display the data indicating the service type and/or the service detail as at least part of the obtained information.

9. A method for searching by an electronic device, comprising:
storing one or more data items received through a beacon signal;
obtaining information related to at least one data item related to a keyword search requested from among the one or more stored data items corresponding to a keyword search request; and
displaying, on a screen, at least part of the obtained information.

10. The method of claim 9, further comprising:
transmitting information about the search-requested keyword to a searching server; and
displaying, on the screen, a search result for the search-requested keyword received from the searching server.

11. The method of claim 9, further comprising:
displaying a message indicating that the at least one beacon signal is received; and
sending a request for information related to the at least one data item to an external electronic device based on an input corresponding to the message.

12. The method of claim 9, further comprising:
accessing a URL included in the beacon signal to identify data included in a webpage displayed;
storing part of the identified data included in the webpage as data received through the beacon signal;
identifying the data contained in the webpage to store data representing at least one of: a service detail, location information, identification information, and a thumbnail image indicating the type of a service of the beacon signal; and
identifying, as the obtained information, data containing one or more of the service detail, location information, and/or identification information related to the search-requested keyword from among the data items stored through the received beacon signal, corresponding to the keyword search request.

13. The method of claim 9, further comprising:
identifying information about a time when the beacon signal corresponding to at least part of the obtained information is received; and
displaying, on the screen, at least part of the obtained information in an order of reception based on the time information.

14. The method of claim 9, further comprising:
identifying information about a location where the beacon signal corresponding to at least part of the obtained information is broadcast;
displaying, on the screen, at least part of the obtained information in an order of closest broadcast based on the location information; and
displaying, on the screen, information related to data broadcast within a predetermined distance from the electronic device from among the obtained information based on the location information.

15. The method of claim 12, further comprising:
storing, in the memory, data indicating the service type and/or the service detail; and
when the data included in the webpage includes the data indicating the service type and/or the service detail, displaying the data indicating the service type and/or the service detail as at least part of the obtained information.
